# EUROPEAN PATENT APPLICATION

(11) **EP 2 160 069 A1**
(43) Date of publication of application: **03.03.2010**
(21) Application number: 08305499.9
(22) Date of filing: 25.08.2008
(51) Int. Cl.: H04W 88/08, H04B 3/58, H04W 16/16

(54) **Home base station with powerline interface for connecting remote radio units for enabling communications between a wireless terminal and a radio-communication cellular network**

(71) Applicant: Alcatel Lucent, 75008 Paris (FR)
(72) Inventor: Housni, Jamal, 92400 Courbevoie (FR); Fourquin, Xavier, 92310 Sevres (FR)
(74) Representative: Hervouet, Sylvie

(57) **Abstract**

The invention concerns a home base station (2) and a transmission/reception system comprising at least one wireless terminal (51,52,53) and the home base station (2), for enabling voice/data exchanges between said wireless terminal (51,52,53) and a radio-communication cellular network (3) through said home base station (2), said exchanges being performed via an Internet connection (4) between said radio-communication cellular network (3) and said home base station (2), and via a first radio ink between said wireless terminal (51,52,53) and said home base station (2). According to the invention the system further comprises at least one additional radio device (61,62) connected to said home base station (2) through a power line connection (6) and adapted to perform a radio transmission/reception with said wireless terminal (51,52,53) via a second radio link so that said wireless terminal (51,52,53) can receive voice/data signals:
- directly from said home base station (2) via said first radio link;
- and/or from said at least one additional radio device (61,62) via said second radio link, after said voice/data signals have been relayed from said home base station (2) to said additional radio device (61,62) through said power line connection (6).

## Description

The invention relates generally to wireless communications and in particular to a home base station for enabling voice or data signal exchanges between a wireless terminal and a radio-communication cellular network, and a transmission/reception system comprising such a home base station.

In order to enlarge their coverage area and to ensure a permanent access and a high quality of service level for a maximum of users, mobile operators must regularly install new base stations to enable a wide and efficient coverage area. However, even if the new base stations are more powerful, they can only manage a limited number of users who are located in the same cell at the same time. Since the number of users regularly increases, mobile operators are therefore obliged to increase the existing base stations to provide sufficient level of services in areas of high density.

Unfortunately, developments of such infrastructures create a huge cost to mobile operators which often report it on users' subscriptions. To avoid such extra cost, it is known to deploy micro cells base stations in some specific places.

Such a solution comes from the observation that, even when the user is at home or at his office, he still uses his wireless terminal by habit or convenience to reach services provided by the mobile operators instead of using his fixed network generally available at his home or office. In order to lighten the traffic with the global cellular base station which covers the geographical area of the user's home or office, it has already been proposed to install a very small indoor access point, also known as a Home Base Station (HBS) or Femto Base Station (FBS), connected to the fixed network of the user's home or office, and to use this Femto-cell and the fixed network instead of the outdoor base station to communicate with the wireless terminal.

More precisely, the HBS is provided by the mobile operator to a subscriber and consists in a simplified base station with a limited power (25 to 35mW) typically designed for use in a residential or small business environment. When installed at home or at office, the HBS is able to cover a small area and can tolerate a small number of wireless terminals (usually one to five) that have been mated to said HBS. The HBS is able, on one hand, to communicate via a radio interface with a mobile terminal of the user and, on the other hand, to communicate with a radio-communication cellular network by using a high speed Internet connection available at the home or office of the user.

Consequently, the outdoor macro base station whose coverage area includes the home or the office of a user provided with an HBS, is decongested since it has no longer to manage the indoor communications of the wireless terminal of the user.

However, a lot of dwelling houses or flats and offices comprise a large numbers of rooms and the emission power of the HBS is often insufficient to enable the coverage of all the rooms.

In addition, aesthetic or technical considerations can prevent the subscriber from installing the HBS at the most adapted place regarding the wireless coverage. For example, already existent electrical installation to which the HBS must be connected to be powered is often difficult to modify. An inadequate installation of the HBS will affect the coverage area associated to the HBS. Consequently, the subscriber risks not being able to use his HBS to perform a communication from all the places of his home or office.

One solution to the limitation of the coverage area of the HBS would be to increase its emission power. However, in areas of high dwelling or high office density, increasing the emission power of the HBS will cause radio signals emitted by an HBS to interfere with radio signals emitted by another HBS located in the neighbour homes or offices. These interferences will considerably decrease quality of the signals received by the mobile terminals.

Furthermore, increasing the emission power will also induce an increase of fabrication costs and exploitation costs of the HBS. In particular, a more powerful HBS will consume more energy. In particular, when installed at the user's home, the HBS is powered via the personal electrical network of the user and the cost due to the electrical consumption of the HBS will be important for the user. A too important exploitation cost of the HBS could then induce the subscribers not to use such a device.

The aim of the present invention is to enable a user to exchange voice or data signals with an radio-communication cellular network via his HBS from any places of his home or his office while keeping the emission power of the HBS at its minimum.

In a first embodiment, the invention discloses a home base station for enabling exchanges of voice/data signals between a radiocommunication cellular network and at least one wireless terminal, said home base station comprising an Internet interface through which signals are exchanged with said radiocommunication cellular network and a radio interface adapted to exchange signals with said wireless terminal via a first radio link, characterized in that said home base station further comprises a power line interface adapted to transmit, on a power line connection, voice/data signals received from said radiocommunication cellular network.

It is then possible to connect any type of radio transmitter/receiver all along the line power line connection to relay the data received from the radiocommunication cellular network. These additional radio transmitters/receivers would be then used to transmit voice/data signals received from the home base station through power line connection to the wireless terminal via a second radio link. This configuration will be particularly advantageous when the wireless terminal is out of reach of the base station.

Advantageously, the home base station is adapted to be connected, through the power line interface and the power line connection, to at least one additional radio transmitter/receiver adapted to perform a radio transmission/reception with said wireless terminal via a second radio link, and in that, said home base station is adapted to transmit said voice/data signals to said wireless terminal:
- directly via said first radio link;
- and/or from said at least one additional radio transmitter/receiver via said second radio link, after said voice/data signals have been transmitted from said power line interface (22) to said additional radio transmitter/receiver through said power line connection.

The power line interface may also be adapted to receive voice/data signals transmitted by the at least one additional transmitter/receiver on the power line connection. Consequently, the home base station is adapted to receive voice/data signal transmitted by said wireless terminal:
- directly from said wireless terminal via first radio link;
- and/or from said at least one additional transmitter/receiver after said voice/data signal have been transmitted to said additional transmitter/receiver through the second radio link and have been relayed from said additional transmitter/receiver to said home base station through the power line connection.

In a second embodiment, the invention is relative to a transmission/reception system comprising at least one wireless terminal and a home base station, for enabling voice/data exchanges between said wireless terminal and a radio-communication cellular network through said home base station, said exchanges being performed via an Internet connection between said radio-communication cellular network and said home base station and via a first radio link between said wireless terminal and said home base station, said system being characterized in that it further comprises at least one additional radio transmitter/receiver connected to said home base station through a power line connection and adapted to perform a radio transmission/reception with said wireless terminal via a second radio link so that said wireless terminal can receive voice/data signals:
- directly from said home base station via said first radio link;
- and/or from said at least one additional transmitter/receiver via said second radio link, after said voice/data signals have been relayed from said home base station to said additional transmitter/receiver through said power line connection.

In the case that the wireless terminal is adapted to exchange voice/data signals simultaneously on a single radio link, the home base station is then adapted to identify which device among the home base station and the at least one additional device is the most appropriate to perform a radio transmission/reception with said wireless terminal, and the voice/data signals are only transmitted to the wireless terminal via the radio link associated to the identified device.

The wireless terminal may also be adapted to function in a MIMO mode and the voice/data signals are then transmitted to the wireless terminal in parallel via the first and second radio links.

Advantageously, the voice/data signals are transmitted from the wireless terminal to the home base station in parallel via said first and second radio links, and the home base station comprises means to process voice/data signals received in parallel from said wireless terminal.

Advantageously, the voice/data signals are relayed through the power line connection by using the Ethernet protocol.

In a third embodiment, the invention discloses a method for transmitting voice/data signals from a home base station to a wireless terminal, said home base station comprising a radio interface adapted to exchange voice/data signals with said wireless terminal via a first radio link, characterized in that it comprises :
- a first transmission of said voice/data signals to an additional radio transmitter/receiver through a power line connection ; and
- a second transmission of said voice/data signals from said additional radio transmitter/receiver to said wireless terminal via a second radio interface associated to said additional radio transmitter/receiver.
In an other embodiment, the invention discloses a method for transmitting voice/data signals from a wireless terminal to a home base station comprising a radio interface adapted to exchange voice/data signals with said wireless terminal via a first radio link, characterized in that it comprises :
- a first transmission of said voice/data signals to an additional radio transmitter/receiver via a second radio interface associated to said additional radio transmitter/receiver; and
- a second transmission of said voice/data signals from said additional radio transmitter/receiver to said home base station through a power line connection.

The features and advantages of the invention will become more apparent from the following detailed description with reference to the attached figures wherein:
- Figure 1 represents schematically a home area equipped with the transmission/reception system according to the invention for enabling communications between several wireless terminals located in the home area and a radio-communication cellular network.
- Figure 2 represents schematically a specific preferred architecture of different elements of an HBS and an additional radio transmitter/receiver which are involved to perform a communication with a wireless terminal according to the system of the invention.

The present invention will be specifically described in a case where the home base station is installed at a user's home. However, such a base station can be installed in any area where an Internet connection is available such as an office and the purpose of the invention is not limited to a home installation.

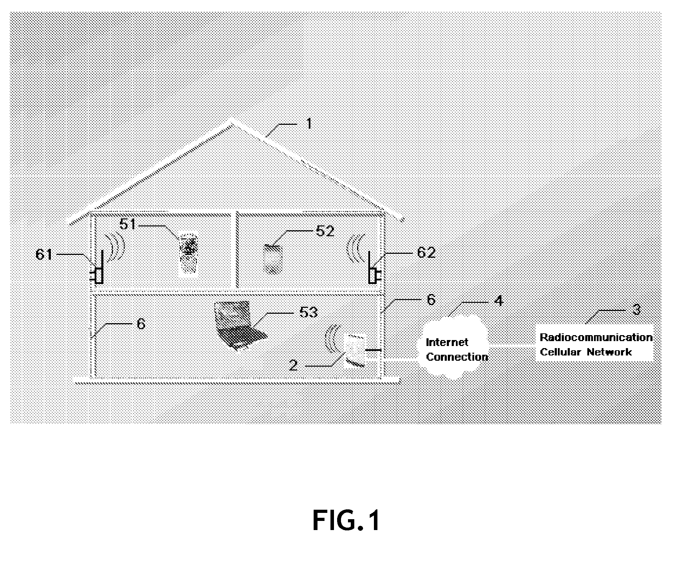

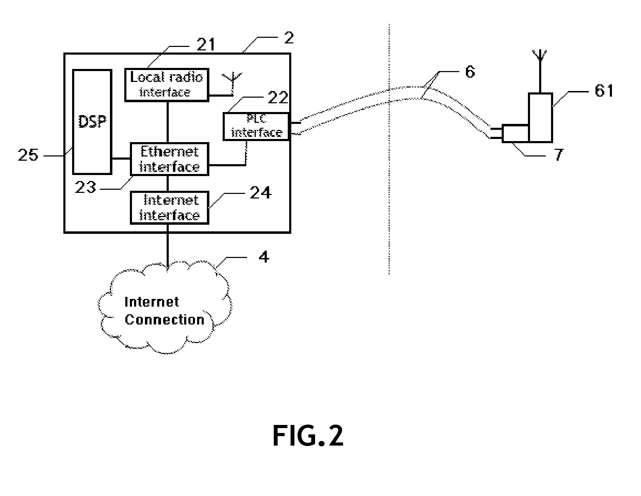

As shown in Figure 1, a home area 1 is provided with a home base station 2 connected with a radio-communication cellular network 3 through an Internet connection 4. In addition, home base station 2 is commonly provided with a antenna and a radio interface 21 (see figure 2) for enabling a wireless terminal 51, 52, 53 which is located inside home area 1 and which has been mated to HBS 2, to perform voice/data signal exchanges with radio-communication cellular network 3. Such an installation enables a user who is at home and in the coverage of HBS 2 to initiate or receive on his wireless terminal 51, 52, 53 all his voice or data communications with radio-communication cellular network 3 via a first radio link with HBS 2.

As shown in figure 2, HBS 2 is also provided, according to the invention, with a power line interface which can be connected to electrical network of home 1. Thanks to this power line interface, home base station 2 can exchange voice/or data signals on a power line connection 6 created on the electrical network of home 1 between home base station and a device connected on the electrical network.

In addition, according to the invention, home area 1 is also provided with additional radio transmitter/receiver 61, 62 adapted to perform a radio communication with a wireless terminal 51, 52, 53 via its own associated radio link. Each additional transmitter/receiver 61, 62 is connected with HBS 2 through a power line connection 6.

The installation of such additional radio device 61, 62 enables, for a downlink exchange, i.e. for an exchange from HBS 2 to wireless terminal 51, 52, 53, that voice/data signals are transmitted to wireless terminal 51, 52, 53 directly from HBS 2 via the first radio link and/or from at least one additional device 61, 62 via its associated radio link. In case of an indirect transmission, i.e. a transmission from HBS 2 to wireless terminal 51, 52, 53 through one additional transmitter/receiver 61, 62, the voice/data signals would have been relayed from HBS 2 to additional radio transmitter/receiver 61, 62 through power line connection 6 existing between HBS 2 and radio transmitter/receiver 61, 62.

Advantageously, additional transmitters/receivers 61, 62 are located in rooms which are not covered by home base station 2. Localisation of those additional transmitters/receivers 61, 62 can also be where the signal emitted by HBS 2 is too altered to be correctly received by a wireless terminal 51, 52, 53 such as places where many radiating elements are working or at the border of the coverage area of HBS 2.

By having installed such additional transmitters/receivers 61, 62, the area from which a wireless terminal 51, 52, 53 of a user can receive or transmit voice or data signals from, respectively to, HBS 2 is enlarged.

In addition, the user is not obliged any more to perform a communication while being located close to HBS 2 and can move across all rooms during a communication without risking to lose the connection with HBS 2. Consequently, itinerancy inside home 1 is enhanced. Furthermore, as HBS 2 can easily be reached from different rooms, a plurality of users can simultaneously establish a communication by using their own wireless terminal 51, 52, 53, each one from a different room and without being in each other's way in home 1.

Operations and interactions between HBS 2, additional transmitters/receivers 61, 62 and wireless terminals 51, 52, 53 according to the invention will be now described with the help of figures 1 and 2.

As shown in figure 2, additional device 61 is provided with a power line connection interface 7. HBS 2 is connected to electrical network of home 1 through its power line interface 22. When the user decides to install a new additional device 61, 62, he connects the device to same home power line network. A power line connection 6 is then established between HBS 2 and additional transmitter/receiver 61, 62.

Advantageously, new installation of an additional radio transmitter/receiver 61, 62 is detected automatically at home base station 2. Power line interface 22 of HBS 2 can identify each new connected device and determine attached technical parameters and characteristics. Identification of each additional transmitter/receiver 61, 62 can be, for instance, stored in a list managed by HBS 2.

Installing or removing of an additional transmitter/receiver 61, 62 can be realized at any time and the managed list is advantageously updated upon each modification without the necessity of a specific user's manipulation.

In a preferred embodiment of the invention, HBS 2 and additional radio transmitters/receivers 61, 62 are adapted to exchange voice/data signals through power line connection 6 by using the Ethernet protocol. In this case, HBS 2 and additional transmitters/receivers 61, 62 are provided with Ethernet interfaces 23 and form, once connected through power line connection 6, an Ethernet network. Even if Ethernet protocol seems to be the most adapted network protocol to easily relay signals between HBS 2 and radio transmitters/receivers 61, 62, other protocols can be used for enabling adapted exchanges between these elements.

When a user's wireless terminal 51, 52, 53 receives voice or data signals from radio-communication cellular network 3, the signals are received at HBS 2 through the Internet connection 4 and classically processed at HBS Internet interface 24.

Contrary to a classical HBS 2 in which received Internet signals are directly processed by HBS radio interface 21 to be transmitted to wireless terminal 51, 52, 53, received Internet signals are transmitted to Ethernet interface 23. At Ethernet interface 23, signals are shaped in a plurality of Ethernet packets which are then forwarded in one hand, to HBS radio interface 21 and, in the other hand, to each additional transmitter/receiver 61, 62 connected to HBS 2 by using home power line connection 6.

Upon reception on additional transmitter/receiver 61, 62, received Ethernet packets are processed to select the information bits to be transmitted to wireless terminal 51, 52, 53. Selected bits are modulated on a baseband signal which is then emitted. Same processing may be realized at HBS radio interface 21.

Then, wireless terminal 51, 52, 53 receives all emitted signals from the different radiating elements (HBS 2 and/or additional transmitter/receiver 61, 62) under the coverage of which it is located. For instance, as shown on figure 1, wireless terminal 53, being located near HBS 2 receives the signal directly from HBS 2. On the contrary, wireless terminal 51 located at the opposite side of the home relatively to HBS 2 only receives the signal from additional transmitter/receiver 61, the signal having been forwarded to additional device 61 by using power connection 6.

In a third configuration, a wireless terminal 52 located in the coverage area of HBS 2 and of an additional transmitter/receiver 62 will receive signals in parallel from HBS and from additional transmitter/receiver 62. Similarly, wireless terminal 51, 52, 53 can receive signals in parallel from a plurality of additional transmitters/receivers 61, 62.

The number of additional transmitters/receivers 61, 62 is not limited. It may be advantageous to install low emission power transmitters/receivers 61, 62 (1mW to 2mW emission power) in each room. Such an installation allows optimizing the global power necessary to perform a communication between HBS 2 and wireless terminal 51, 52, 53 located in house 1. Indeed, as already quoted above, for a house comprising a large number of rooms, a HBS 2, the emission power of which is 35mW, can be insufficient to cover all the rooms. With the system according to the invention, a global coverage area which covers all the different rooms can easily be realized by using a HBS 2 with an emission power of 2mW and additional radio transmitters/receivers 61, 62 with a 2mW emission power located in the different rooms. Each of the plurality of the additional transmitters/receivers 61, 62 is connected with HBS 2 via existing power line network 6.

Furthermore, thanks to such a global coverage area, the power consumption of different wireless terminals 51, 52, 53 located at home is also optimized. Indeed, as each wireless terminal 51, 52, 53 is located near a radio element 2, 61, 62, it can receive and transmit signals from/to the radio element 2, 61, 62 while consuming little power. Consequently, battery of wireless terminals 51, 52, 53 will last a longer time when used at home 1, which is very convenient to the user.

In addition, home or office are typical environments in which multi-path propagation occurs and numerous wireless terminals are now able to function in a MIMO (Multi-Input Multi-Output) mode. MIMO mode enables to enhance the wireless transmission when signals experiences multi-path propagation.

In one embodiment, when wireless terminal 51, 52, 53 is adapted to function in a MIMO mode, the voice/data signals are transmitted from HBS 2 in parallel via the first radio link and via all the radio links associated to additional radio transmitters/receivers 61, 62. Advantageously, home base station 2 also comprises means 23, 25 to process voice/data signals received in parallel via the different radio links.

In such a case, all the additional radio devices 61, 62 and HBS 2 can be considered as a unique base station comprising a plurality of antennas adapted to perform a MIMO transmission/reception.

Consequently, for on downlink transmission, when such a wireless terminal 51, 52, 53 is located simultaneously in a plurality of coverage areas such as the coverage area associated with home base station 2 and the coverage area associated with additional transmitter/receiver 62, it will receive same voice/data signals in parallel. Thanks to its MIMO mode, signals will be processed and the quality of the transmission will be enhanced.

For an uplink transmission, depending on the place where wireless terminal 52 is located, the transmitted signals can be received in parallel on additional transmitters/receivers 61, 62 and directly on HBS 2. Each additional transmitter/receiver 61, 62 which has received the signals, relays it to HBS 2 in form of an Ethernet packet. Ethernet interface 21 receives then Ethernet packets relative to same signals.

However, the signals have not necessary been correctly received on each radio element (HBS radio interface 21 or additional radio transmitter/receiver 61, 62) and DSP 25 is then able to select the packets corresponding to the signals that was most strongly received.

Selected packets are then transmitted and processed at Internet interface 24 in order the voice/data signals can be transmitted to radio-communication cellular network 3 via Internet connection 4.

As it has been described, it may be interesting to install additional transmitters/receivers 61, 62 so that their coverage areas present common areas. Such an installation can indeed enable MIMO exchanges between an adapted wireless terminal and HBS 2.

Nevertheless, all wireless terminals are not adapted to function in a MIMO mode and most part of wireless terminals is able to perform, at a precise moment, an uplink transmission only with one antenna. This is also the case when a wireless terminal adapted to function in a MIMO mode is located in a coverage area associated to only one device among HBS 2 or additional transmitters/receivers 61, 62.

In these cases, for wireless terminal 51, 53 previously mated to HBS 2, the plurality of radio transmitters/receivers 61, 62 and HBS 2 are considered as a plurality of base stations belonging to same wireless network. Thus, wireless terminal 51, 53 and the plurality of the base stations (additional radio transmitters/receivers 61, 62 and HBS 2) will exchange control signals to periodically perform power controls. Thanks to these power controls, wireless terminal 51, 53 will be able to determine which device among the plurality of additional radio transmitters/receivers 61, 62 and HBS radio interface 21 is the most adapted to perform an uplink transmission.

More precisely, a power control enables a wireless terminal 51, 52 to determine with which device it can perform a non-altered radio communication by using the less power. Once, the most adapted device is determined, wireless terminal will perform all the uplink transmissions through this device until a next power control identifies another radio device to use.

Consequently, when results of a power control indicates that the radio link between HBS 2 and wireless terminal 53 is the stronger radio link, voice/ data signals are directly transmitted from wireless terminal 53 to HBS 2. On the contrary, when wireless terminal 51 is, for example, far from HBS 2, result of power control will certainly indicate that wireless terminal 51 has to send its voice/data signals to additional transmitter/receiver 61. In this case, signals are transmitted indirectly to HBS 2 through additional transmitter/receiver 61 and power line connection 6.

In case wireless terminal 51, 53 is adapted to perform, at a precise moment, a radio exchange with only one device among HBS 2 and additional transmitters/receivers 61, 62, HBS 2 is advantageously adapted to identify which device is the most appropriate to perform radio transmission/reception with wireless terminal 51, 53. Voice/data signals are then only transmitted from HBS 2 to wireless terminal via the radio link associated to the identified device.

Identification of the device can be performed by using control power process. For instance, for each wireless terminal 51, 53 mated with HBS 2, result of periodical power control is transmitted to HBS 2.

Thus, when wireless terminal 51, 53 has determined the most appropriate device to perform a radio-communication, it transmits to this device information indicating that it is located in its associated coverage area. Information further comprises an identification of wireless terminal 51, 53.

If the device is one of the additional radio transmitters/receivers 61, 62, information is transmitted to HBS 2 in the form of an Ethernet packet by using power line connection 6. In case the device is HBS 2, information is directly received at HBS radio interface 21 which forwards it to HBS Ethernet interface 21.

HBS 2 then extracts the identification of wireless terminal 51, 53 and the source address of the received Ethernet packet. Information may be then stored in a list which will be used when a signal is received from radio-communication cellular network 3.

More precisely, when a signal is received from radio-communication cellular network 3, HBS 2 analyses the destination information comprised in the signal to detect to which wireless terminal 51, 53 the received signal must be transmitted. Once destination information is extracted, HBS 2 consults the above mentioned list to identify which device among the additional devices or the HBS radio interface will be used to transmit signal to wireless terminal 51, 53.

After having identified the device, Ethernet interface processes the signal and sends it in form of Ethernet packets. Each processed Ethernet packet has a specific destination address corresponding to the identified device. Then only, the identified device will receive the packet and perform a radio transmission to wireless terminal 51, 53 via its associated radio link.

As only the most adapted device is used to perform a downlink transmission, the global power consumption of the system will decrease.

## Claims

1. Home base station (2) for enabling exchanges of voice/data signals between a radiocommunication cellular network (3) and at least one wireless terminal (51, 52, 53), said home base station (2) comprising an Internet interface (24) through which signals are exchanged with said radiocommunication cellular network (3) and a radio interface (21) adapted to exchange signals with said wireless terminal (51, 52, 53) via a first radio link, **characterized in that** said home base station (2) further comprises a power line interface (22) adapted to transmit, on a power line connection (6), voice/data signals received from said radiocommunication cellular network (3).

2. Home base station (2) according to claim 1, **characterized in that** it is adapted to be connected, through the power line interface (22) and the power line connection (6), to at least one additional radio transmitter/receiver (61, 62) adapted to perform a radio transmission/reception with said wireless terminal (51, 52, 53) via a second radio link, and **in that**, said home base station (2) is adapted to transmit said voice/data signals to said wireless terminal (51, 52, 53):
- directly via said first radio link;
- and/or from said at least one additional transmitter/receiver (61, 62) via said second radio link, after said voice/data signals have been transmitted from said power line interface (22) to said additional radio transmitter/receiver (61, 62) through said power line connection (6).

3. Home base station (2) according to claim 2, **characterized in that** said power line interface (22) is further adapted to receive voice/data signals transmitted by the at least one additional transmitter/receiver (61, 62) on the power line connection (6), and **in that** said home base station (2) is adapted to receive voice/data signal transmitted by said wireless terminal (51, 52, 53):
- directly from said wireless terminal (51, 52, 53) via first radio link;
- and/or from said at least one additional transmitter/receiver (61, 62) after said voice/data signal have been transmitted to said additional transmitter/receiver (61, 62) through the second radio link and have been relayed from said additional transmitter/receiver (61, 62) to said home base station (2) through the power line connection (6).

4. Home base station according to claim 2, **characterized in that,** said wireless terminal (51, 52, 53) being adapted to exchange voice/data signals on a single radio link, said home base station (2) is adapted to identify which device among the home base station (2) and the at least one additional device (61, 62) is the most appropriate to perform a radio transmission/reception with said wireless terminal (51, 52, 52), and is adapted to:
- only transmit said voice/data signals to said wireless terminal (51, 52, 53) via the first radio link if the home base station (2) corresponds to the identified device, or
- only transmit said voice/data signals to the identified additional transmitter/receiver through the power line connection so that said signals are only transmitted to said wireless terminal via the second radio link.

5. Home base station according to claim 2, **characterized in that,** said wireless terminal (51, 52, 53) being adapted to function in a MIMO mode, the home base station (2) is adapted to transmit said voice/data signals to said wireless terminal in parallel directly via said first radio link and from said at least one additional (61, 62) transmitter/receiver via said second radio link, after said voice/data signals have been transmitted from said power line interface (22) to said additional radio transmitter/receiver (61, 62) through said power line connection (6).

6. Home base station according to claims 3 and 5, **characterized in that** it comprises means (23, 25) adapted to process voice/data signals received in parallel when said voice/data signals are transmitted from said wireless terminal (51, 52, 53) to said home base station (2) in parallel via said first and second radio links.

7. Transmission/reception system comprising at least one wireless terminal (51, 52, 53) and a home base station (2), for enabling voice/data exchanges between said wireless terminal (51, 52, 53) and a radio-communication cellular network (3) through said home base station (2), said exchanges being performed via an Internet connection (4) between said radio-communication cellular network (3) and said home base station (2) and via a first radio link between said wireless terminal (51, 52, 53) and said home base station (2), said system being **characterized in that** it further comprises at least one additional radio transmitter/receiver (61, 62) connected to said home base station (2) through a power line connection (6) and adapted to perform a radio transmission/reception with said wireless terminal (51, 52, 53) via a second radio link so that said wireless terminal (51, 52, 53) can receive voice/data signals:
- directly from said home base station (2) via said first radio link;
- and/or from said at least one additional transmitter/receiver (61, 62) via said second radio link, after said voice/data signals have been relayed from said home base station (2) to said additional transmitter/receiver (61, 62) through said power line connection (6).

8. Transmission/reception system according to claim 7, **characterized in that,** said wireless terminal (51, 52, 53) being adapted to exchange voice/data signals on a single radio link, said home base station is adapted to identify which device among the home base station (2) and the at least one additional transmitter/receiver (61, 62) is the most appropriate to perform a radio transmission/reception with said wireless terminal (51, 52, 52), and **in that** voice/data signals are only transmitted to said wireless terminal (51, 52, 53) via the radio link associated to the identified device.

9. Transmission/reception system according to claim 7, **characterized in that,** said wireless terminal (51, 52, 53) being adapted to function in a MIMO mode, said voice/data signals are transmitted to said wireless terminal (51, 52, 53) in parallel via said first and second radio links.

10. Transmission/reception system according to claim 9, **characterized in that** voice/data signals are transmitted from said wireless terminal (51, 52, 53) to said home base station (2) in parallel via said first and second radio links, and **in that** said home base station (2) comprises means (23, 25) to process said voice/data signals received in parallel from said wireless terminal (51, 52, 53).

11. Transmission/reception system according to any one of the preceding claims 7 to 9 **characterised in that** voice/data signals are relayed through said power line connection (6) by using the Ethernet protocol.

12. A method for transmitting voice/data signals from a home base station (2) to a wireless terminal (51, 52, 53), said home base station (2) comprising a radio interface (22) adapted to exchange voice/data signals with said wireless terminal (51, 52, 53) via a first radio link, **characterized in that** it comprises :
- a first transmission of said voice/data signals to an additional radio transmitter/receiver (61, 62) through a power line connection (22); and
- a second transmission of said voice/data signals from said additional radio transmitter/receiver (61, 62) to said wireless terminal (51, 52, 53) via a second radio interface associated to said additional radio transmitter/receiver (61, 62).

13. A method for transmitting voice/data signals from a wireless terminal (51, 52, 53) to a home base station comprising a radio interface (22) adapted to exchange voice/data signals with said wireless terminal (51, 52, 53) via a first radio link, **characterized in that** it comprises :
- a first transmission of said voice/data signals to an additional radio transmitter/receiver (61, 62) via a second radio interface associated to said additional radio transmitter/receiver (61, 62); and
- a second transmission of said voice/data signals from said additional radio transmitter/receiver (61, 62) to said home base station (2) through a power line connection (22).
